# EUROPEAN PATENT SPECIFICATION

(11) **EP 4 340 146 B1**
(45) Date of publication and mention of the grant of the patent: **14.05.2025**
(21) Application number: 23197721.6
(22) Date of filing: 15.09.2023
(51) Int. Cl.: H02G 3/04

(54) **MESH CABLE TRAY**
GITTERKABELKANAL
PLATEAU DE CÂBLE À MAILLES

(30) Priority: 19.09.2022 ES 202231522 U
(43) Date of publication of application: 20.03.2024
(73) Proprietor: Unex Aparellaje Electrico S.L., 08005 Barcelona (ES)
(72) Inventor: MOSTAZO OVIEDO, José Antonio, 08005 Barcelona (ES)
(74) Representative: Curell Suñol S.L.P.

(56) References cited:
- EP-A1- 3 422 507
- EP-A1- 3 422 508
- US-A1- 2017 104 319

## Description

### Field of the Invention

The invention is comprised in the field of mesh cable trays which are used to guide and support bundles of electric cables, fiber optic cables, or another type of cables.

More specifically, the invention relates to a mesh cable tray of the type made from a single piece of polymeric material, having a U-shaped cross-section, with a bottom wall and two side walls, and made up of a plurality of parallel longitudinal rods and a plurality of parallel transverse rods, said longitudinal rods and transverse rods intersecting with one another, forming a mesh and being joined to one another at the intersections with one another, said longitudinal rods and transverse rods being coplanar at the intersections with one another.

### State of the Art

Mesh cable trays are particularly suitable for conducting electric cables that are to be well ventilated, so that air can pass freely through the bottom wall and the side walls of the mesh cable tray. They are also suitable for conducting any type of cable (electric power or data cable, fiber optic cable, etc.) in installations where the cables are to be in view and readily accessible. Another advantage of mesh cable trays is that they have good mechanical strength but are not excessively heavy.

There are several solutions known for fixing a mesh cable tray to a support structure, for attaching two mesh cable tray segments to one another, or for fixing devices to a mesh cable tray. These known solutions are based on a piece that is specially shaped to snap fit under pressure, or to be form fitted, with one or more of the rods of the mesh cable tray. The following patent documents disclose various examples of these known solutions: ES1060632U, EP1793464A1, EP2355281A1, FR3029022A1, EP2884608A1, EP905843A2, ES2827126A1, EP3709459A2. A drawback of these solutions is that they require using a specific piece specially designed to be coupled to one or more of the rods of the mesh cable tray. Another drawback is that the user must place the piece in a suitable position to enable it to fit with one or more of said rods, which is not always easy, particularly when the cable tray is located at a substantial height or in a hard-to-access place.

These known solutions are typically used for mesh cable trays in which the longitudinal rods and transverse rods forming a mesh are metallic rods having a circular cross-section which cross one another in superimposed planes and are welded to one another at intersection points.

Mesh cable trays of the type indicated above are known and, rather than being formed by metallic rods welded to one another, they are made from a single piece of polymeric material and in them the longitudinal rods and transverse rods are coplanar at the intersections with one another. Patent documents EP3422507A1 and EP3422508A1 describe mesh cable trays of this type made by means of injection molding or by means of machining, respectively.

Document EP3422507A1 discloses the features of the preamble of independent claim 1. Document US2017104319A1 discloses a cable tray formed in a single piece from a metal sheet.

Generally, the known solutions described above can also be applied to these mesh cable trays made from a single piece of polymeric material.

### Description of the Invention

The objective of the invention is to provide a mesh cable tray of the type indicated above, which allows fixing the mesh cable tray to a support structure, attaching two mesh cable tray segments to one another, or fixing devices to the mesh cable tray more readily than in the known solutions described above and without the need to use a piece with a special shape to be coupled to the rods.

This objective is achieved by means of a mesh cable tray of the type indicated above, characterized in that at least one of the bottom wall and the side walls comprises at least one ring delimiting a through hole, said ring being formed by a rod branch extending from at least one of said longitudinal rods and transverse rods, said ring being coplanar with said longitudinal rods and said transverse rods in the bottom wall or in the side wall comprising said ring.

This solution according to the invention has several advantages. First, it allows using any known fixing system requiring only the existence of a through hole in the cable tray. For example, a screw introduced through the through hole can simply be used to fix the mesh cable tray to a support, to fix a connecting plate to two mesh cable tray segments, or to fix a device to the mesh cable tray. It is particularly possible to use the same fixing systems as those used for continuous cable trays, i.e., with full walls, provided with through holes in the bottom or side walls thereof. Therefore, it is possible to have a single set of fixing systems which can be used both for continuous cable trays and for mesh cable trays. Secondly, as a result of the ring formed by the rod branch being coplanar with the longitudinal rods and transverse rods, it can rest in a single plane, together with the side wall or the bottom wall, against a flat surface of a support or of a device, which provides greater stability for the fasteners. Thirdly, as the ring is formed by a rod branch, the cable tray fully preserves its mesh structure, which allows maintaining the properties characteristic of a mesh cable tray mentioned above: proper aeration of the cables, visibility of and accessibility to the cables, and a lower weight.

In some embodiments, the rod branch forming the ring is formed in one of the longitudinal rods or in one of the transverse rods of the mesh cable tray. This solution has the advantage of the open spaces of the mesh between the longitudinal and transverse rods forming said mesh being left practically unchanged, whereby the characteristics of aeration and passage for the cables provided by the mesh remain unchanged.

In other embodiments, the rod branch forms a bridge between two of the longitudinal rods or the transverse rods. This solution provides greater stiffness to the rod articulation forming the ring.

These two solutions can be combined in one and the same mesh cable tray, which may comprise one or more rod branches forming the ring in one of the longitudinal rods or in one of the transverse rods, and one or more rod branches forming the ring in a bridge between two of the longitudinal rods or the transverse rods.

In the preferred embodiments, the ring is elongated and the through hole is a slotted hole, preferably straight. This solution provides a mesh cable tray which is equivalent, in terms of its fixing possibilities, to continuous cable trays provided with slotted through holes. Preferably, the width of the slotted through hole, in the plane of the bottom wall or of the side wall comprising said slotted through hole, is greater than or equal to 5 mm and less than or equal to 12 mm. This allows using the same fixing systems, particularly the fixing systems based on screws, as those used for continuous cable trays.

In the preferred embodiments, the mesh cable tray comprises a plurality of rings formed by a rod branch, said rings being distributed along the length and/or along the width of the mesh cable tray to provide multiple fixing possibilities.

Preferably, the polymeric material constituting the mesh cable tray is an electrically insulating material with a surface resistivity greater than 100 MΩ (surface resistivity measured according to standard EN 62631-3-2:2016).

The invention also comprises other detail features shown in the following detailed description of an embodiment of the invention and in the attached figures.

### Brief Description of the Drawings

The advantages and features of the invention are apparent from the following description in which preferred embodiments of the invention are described in reference to the figures in a manner not limiting the scope of the main claim.
Figure 1 is a top isometric perspective view of a mesh cable tray according to a first embodiment.
Figure 2 is an enlarged partial top perspective view of the mesh cable tray, from a different angle that allows seeing the rings more clearly.
Figure 3 is a partial enlarged view of Figure 2, showing one of the rings and an area around same.
Figures 4, 5, and 6 are, respectively, a bottom perspective view, a top view, and a bottom view showing the same area as Figure 3.
Figures 7 and 8 are, respectively, a partial perspective view and a front view, sectioned along plane A-A shown in Figure 5.
Figure 9 is a top perspective view of an end of a mesh cable tray according to a second embodiment.
Figure 10 is a top view of the same end as that of Figure 9.
Figure 11 is a top perspective view of an end of a mesh cable tray according to a third embodiment.
Figure 12 is a partial top view of the same end as that of Figure 11.
Figure 13 is a top perspective view of an end of a mesh cable tray according to a fourth embodiment.
Figure 14 is a side view of the same end as that of Figure 13.
Figure 15 is a top perspective view of an end of a mesh cable tray according to a fifth embodiment.
Figure 16 is a side view of the same end as that of Figure 15.

### Detailed description of embodiments of the invention

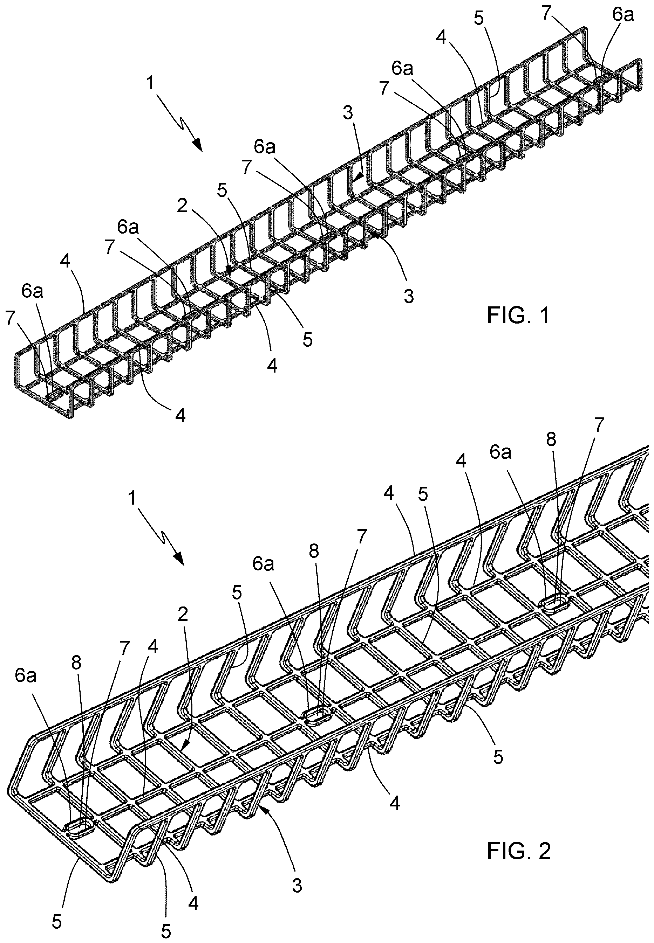

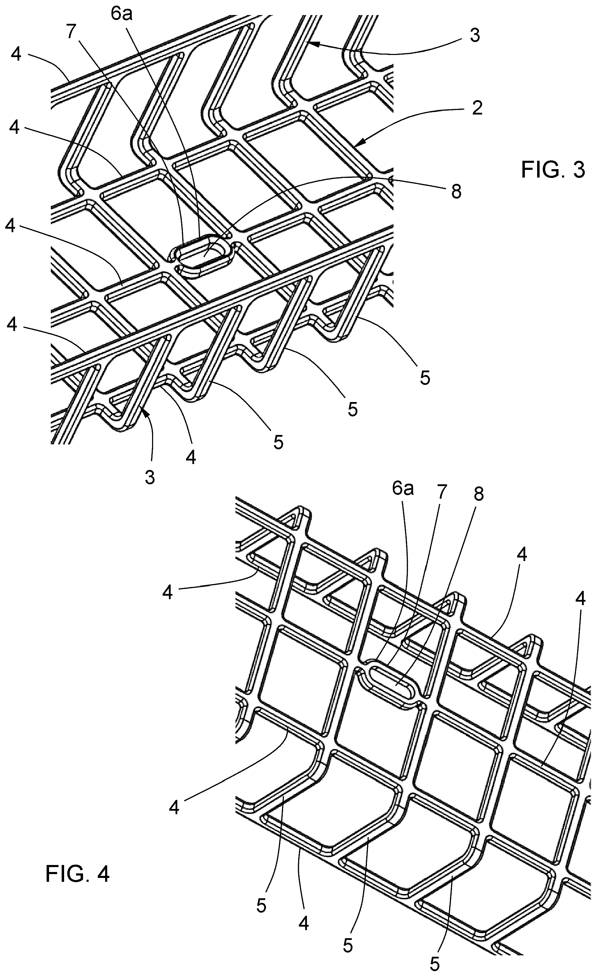

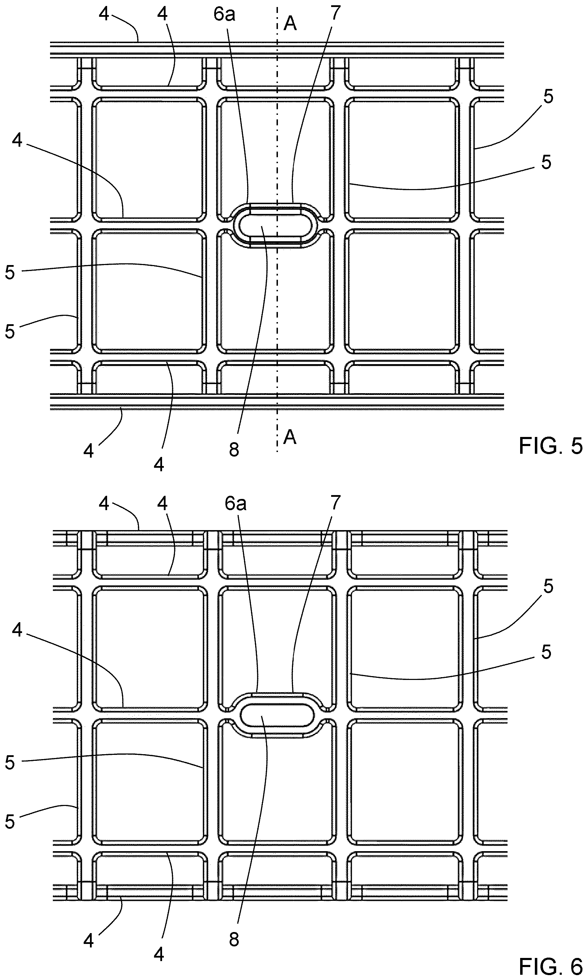

Figures 1 to 8 show a first embodiment of a mesh cable tray 1 according to the invention.

The mesh cable tray 1 is made from a single piece of polymeric material. It can be obtained by means of injection molding, according to the method described in patent document EP3422507A1, or by means of machining a continuous cable tray previously obtained by means of extrusion molding, according to the method described in patent document EP3422508A1. The polymeric material used for the mesh cable tray 1 is preferably an electrically insulating material with a surface resistivity greater than 100 MΩ (measured according to standard EN 62631-3-2:2016). For example, the polymeric material is polyvinyl chloride (PVC).

The mesh cable tray 1 has a U-shaped cross-section, with a bottom wall 2 and two side walls 3, and is made up of a plurality of parallel longitudinal rods 4 and a plurality of parallel transverse rods 5 intersecting one another, forming a mesh and being joined to one another at the intersections with one another, such that they are coplanar at said intersections. The bottom wall 2 and the side walls 3 are open, as they are formed by the longitudinal rods and the transverse rods 5 which intersect with one another. The longitudinal rods 4 are straight and each of them extends along the entire length of the mesh cable tray 1. The transverse rods 5 are U-shaped and each one of them extends, in the same plane, along the entire width of the mesh cable tray 1.

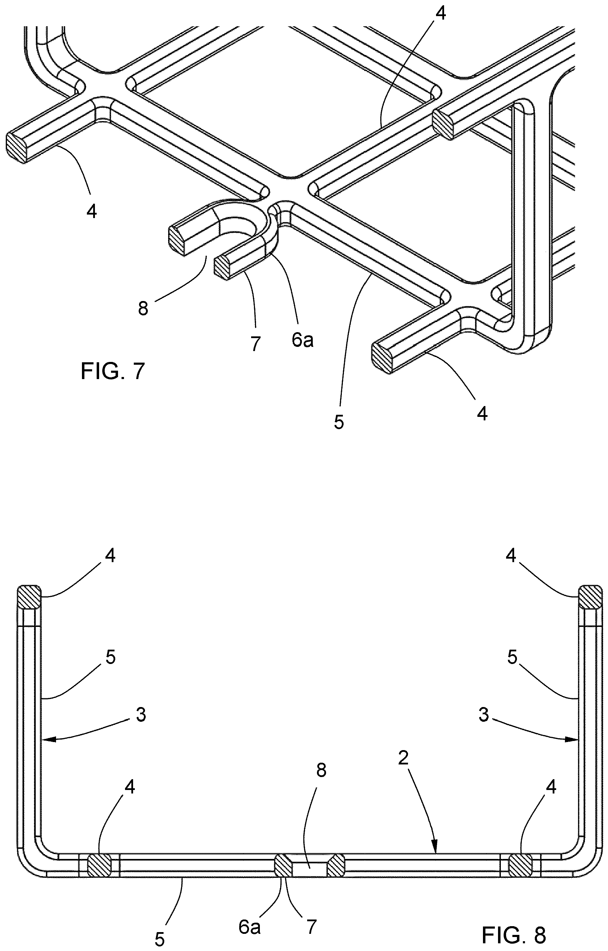

The bottom wall 2 comprises a plurality of identical rings 7 distributed along the length of mesh cable tray 1. In the example depicted in the figures, the bottom wall 2 has four rings 7 evenly spaced from one another. Two rings 7 are respectively arranged at each of the two ends of the mesh cable tray 1, and two other rings 7 are arranged in the central segment. Each ring 7 delimits a through hole 8 and is formed by a rod branch 6a extending from a longitudinal rod 4 or from a transverse rod 5. In the example depicted in the figures, each rod branch 6a extends from the central longitudinal rod 4 and is formed in said longitudinal rod 4. Each ring 7 is elongated and the through hole 8 formed by said ring 7 is a slotted hole. In this example, the slotted through hole 8 is straight and extends in a straight line in the longitudinal direction of the mesh cable tray 1. The slotted through hole 8 has the following dimensions, in the plane of the bottom wall 2: a width of 9 mm and a length of 17 mm, or a width of 6.5 mm and a length of 15 mm, depending on whether said slotted through hole 8 is provided for using metric M8 or M6 screws, respectively. To fix the mesh cable tray 1 to a support or to a plate for attaching two mesh cable trays 1, or to fix a device to the mesh cable tray 1, the screw is introduced through the slotted through hole 8 and the head of said screw rests on the ring 7. As can be seen particularly in Figures 7 and 8, the ring 7 is coplanar with the longitudinal rods 4 and the transverse rods 5 of the bottom wall 2.

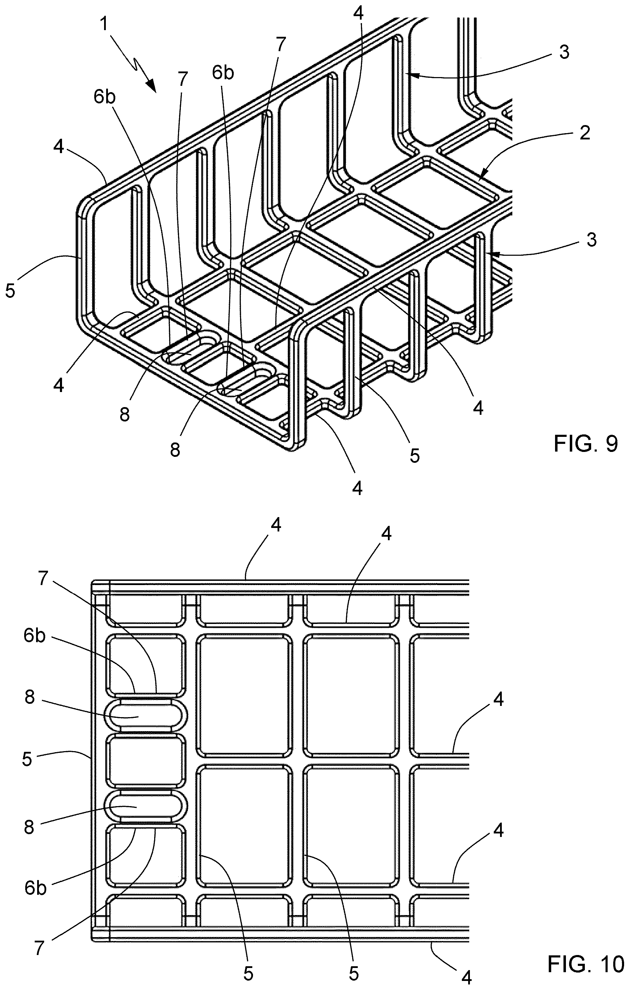

Figures 9 and 10 show a second embodiment of the mesh cable tray 1, which only differs from the first embodiment essentially in the shape and position of the rod branches forming the rings. In this case, there is a group of two rod branches 6b, one next to the other, in the bottom wall 2, each of them forming a ring 7 delimiting a slotted through hole 8. The shape and dimensions of the slotted through hole 8 are the same as in the first embodiment. The slotted through hole 8 is straight and extends in a straight line in the longitudinal direction of the mesh cable tray 1. Each rod branch 6b forms a bridge between two transverse rods 5. Figures 9 and 10 depict only one end of the mesh cable tray 1, comprising the group of two rod branches 6b forming the respective rings 7. The mesh cable tray 1 may comprise a plurality of rod branches 6b distributed along the length of the bottom wall 2.

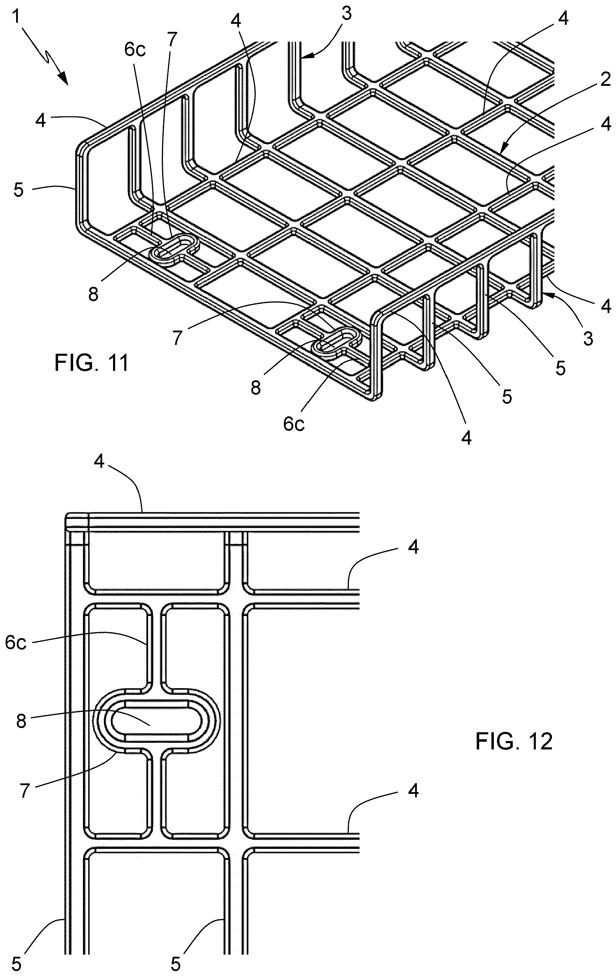

Figures 11 and 12 show a third embodiment of the mesh cable tray 1, which only differs from the first embodiment essentially in that it is wider, and in the shape and position of the rod branches forming the rings. In this case, there is a group of two separate rod branches 6c in the bottom wall 2, each of them being arranged next to one of the side walls 3, and each of them forming a ring 7 delimiting a slotted through hole 8. The shape and dimensions of the slotted through hole 8 are the same as in the first embodiment. The slotted through hole 8 is straight and extends in a straight line in the longitudinal direction of the mesh cable tray 1. Each rod branch 6c forms a bridge between two longitudinal rods 4 of the bottom wall 2. To that end, the rod branch 6c has two arms arranged on each side of the ring 7, aligned in a transverse direction of the mesh cable tray 1. Figures 11 and 12 only depict an end of the mesh cable tray 1, comprising the group of two rod branches 6c forming the respective rings 7. The mesh cable tray 1 may comprise a plurality of rod branches 6c distributed along the length of the bottom wall 2. In the example depicted in Figures 11 and 12, the ring 7 is joined to the longitudinal rods 4 by the two arms of the rod branch 6c. It is possible to provide for other embodiments in which the ring 7 is joined both to the longitudinal rods 4 and to the transverse rods 5, or only to the transverse rods 5, by arms of the rod branch 6c.

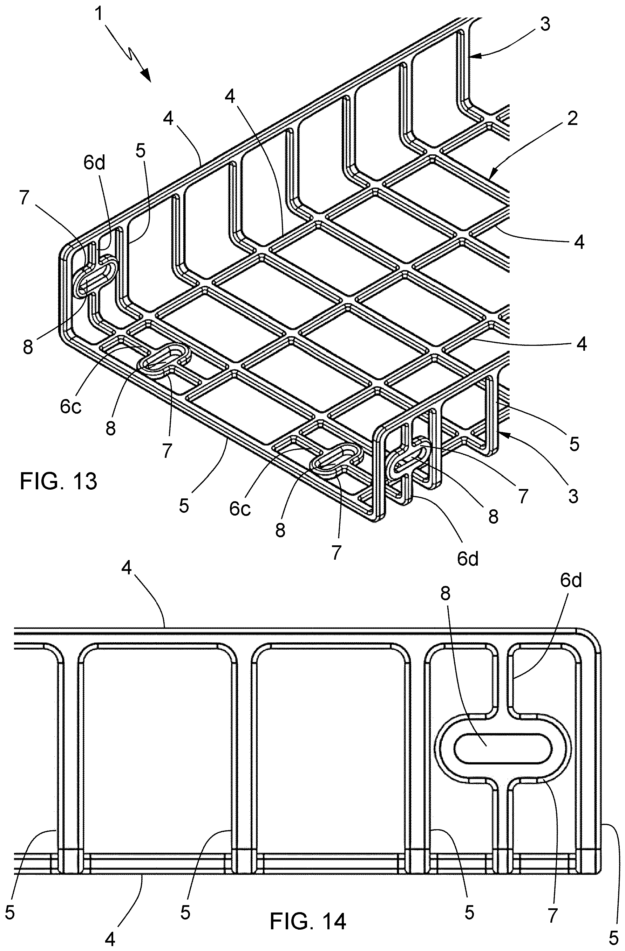

Figures 13 and 14 show a fourth embodiment of the mesh cable tray 1, which only differs from the preceding embodiment in that, in addition to the already described rod branches 6c in the bottom wall 2, it comprises rod branches 6d in the side walls 3, each of them forming a ring 7 delimiting a slotted through hole 8. The shape and dimensions of the slotted through hole 8 are the same as in the first embodiment. The slotted through hole 8 is straight and extends in a straight line in the longitudinal direction of the mesh cable tray 1. Each rod branch 6d forms a bridge between a longitudinal rod 4 of the bottom wall 2 and a longitudinal rod 4 of the side wall 3. To that end, the rod branch 6d has two arms arranged on each side of the ring 7, aligned in a transverse direction of the mesh cable tray 1, and the arm connecting the ring 7 with the longitudinal rod 4 of the bottom wall 2 is bent the same way as the transverse rods 5. Figures 13 and 14 only depict an end of the mesh cable tray 1, comprising the rod branches 6c and 6d forming the respective rings 7. The mesh cable tray 1 may comprise a plurality of rod branches 6c and 6d distributed along the length of the bottom wall 2.

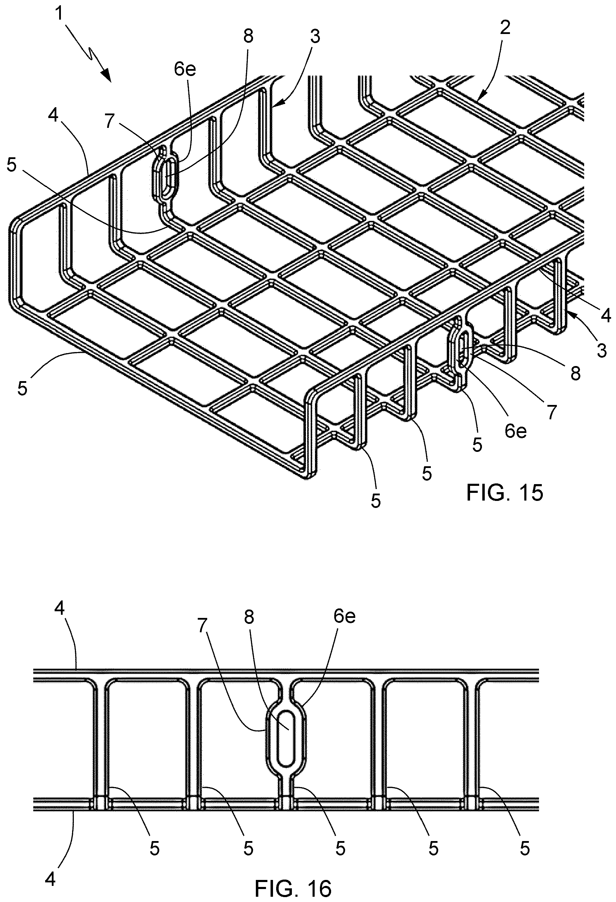

Figures 15 and 16 show a fifth embodiment of the mesh cable tray 1, which only differs from the preceding embodiment in the shape and position of the rod branches forming the rings. In this case, there is a group of two rod branches 6e, with each of them being arranged in one of the side walls 3 and forming a ring 7 delimiting a slotted through hole 8. The shape and dimensions of the slotted through hole 8 are the same as in the first embodiment. The slotted through hole 8 is straight and extends in a straight line in a transverse direction of the mesh cable tray 1. Each rod branch 6e extends from a transverse rod 5 and is formed in said transverse rod 5. Figures 15 and 16 only depict an end of the mesh cable tray 1, comprising the rod branches 6e forming the respective rings 7. The mesh cable tray 1 may comprise a plurality of rod branches 6e distributed along the length of the side walls.

Unrestricted combinations of the different forms of rod branch 6a, 6b, 6c, 6d and 6e shown, as well as of other possible forms of the rod branch, such that they are distributed in the bottom wall 2 or in the side walls 3 in a different number and position are possible.

## Claims

1. A mesh cable tray (1) made from a single piece of polymeric material, having a U-shaped cross-section, with a bottom wall (2) and two side walls (3), and made up of a plurality of parallel longitudinal rods (4) and a plurality of parallel transverse rods (5), said longitudinal rods (4) and transverse rods (5) intersecting with one another, forming a mesh and being joined to one another at the intersections with one another, said longitudinal rods (4) and transverse rods (5) being coplanar at the intersections with one another, **characterized in that** at least one of said bottom wall (2) and said side walls (3) comprises at least one ring (7) delimiting a through hole (8), said ring (7) being formed by a rod branch (6a, 6b, 6c, 6d, 6e) extending from at least one of said longitudinal rods (4) and transverse rods (5), said ring (7) being coplanar with said longitudinal rods (4) and said transverse rods (5) in the bottom wall (2) or in the side wall (3) comprising said ring (7).

2. The mesh cable tray (1) according to claim 1, **characterized in that** said rod branch (6a, 6e) forming said ring (7) is formed in one of said longitudinal rods (4) or in one of said transverse rods (5).

3. The mesh cable tray (1) according to claim 1, **characterized in that** said rod branch (6b, 6c, 6d) forming said ring (7) forms a bridge between two of said longitudinal rods (4) or said transverse rods (5).

4. The mesh cable tray (1) according to any one of claims 1 to 3, **characterized in that** said ring (7) is elongated and said through hole (8) is a slotted hole.

5. The mesh cable tray (1) according to claim 4, **characterized in that** the width of said slotted through hole (8), in the plane of the bottom wall (2) or of the side wall (3) comprising said slotted through hole (8), is greater than or equal to 5 mm and less than or equal to 12 mm.

6. The mesh cable tray (1) according to any one of claims 1 to 5, **characterized in that** it comprises a plurality of said rings (7) formed by a rod branch (6a, 6b, 6c, 6d, 6e), said rings (7) being distributed along the length and/or along the width of said mesh cable tray (1).

## Patentansprüche

1. Eine Gitter-Kabelrinne (1), die aus einem einzigen Stück Polymermaterial hergestellt ist, aufweisend einen U-förmigen Querschnitt, mit einer Bodenwand (2) und zwei Seitenwänden (3), und bestehend aus einer Vielzahl paralleler Längsstäbe (4) und einer Vielzahl paralleler Querstäbe (5), wobei die Längsstäbe (4) und Querstäbe (5) einander kreuzen, ein Gitter bilden und an den Schnittstellen miteinander verbunden sind, wobei die Längsstäbe (4) und Querstäbe (5) an den Schnittstellen miteinander koplanar sind, **dadurch gekennzeichnet, dass** mindestens eine der Bodenwand (2) und der Seitenwände (3) mindestens einen Ring (7) umfasst, der ein Durchgangsloch (8) begrenzt, wobei der Ring (7) durch eine Stabverzweigung (6a, 6b, 6c, 6d, 6e) gebildet wird, die sich von mindestens einem der Längsstäbe (4) und Querstäbe (5) erstreckt, wobei der Ring (7) koplanar mit den Längsstäben (4) und den Querstäben (5) in der Bodenwand (2) oder in der Seitenwand (3) ist, die den Ring (7) umfasst.

2. Die Gitter-Kabelrinne (1) gemäß Anspruch 1, **dadurch gekennzeichnet, dass** die Stabverzweigung (6a, 6e), die den Ring (7) ausbildet, in einer der Längsstäbe (4) oder in einer der Querstäbe (5) ausgebildet ist.

3. Die Gitter-Kabelrinne (1) gemäß Anspruch 1, **dadurch gekennzeichnet, dass** die Stabverzweigung (6b, 6c, 6d), die den Ring (7) ausbildet, eine Brücke zwischen zwei der Längsstäbe (4) oder der Querstäbe (5) ausbildet.

4. Die Gitter-Kabelrinne (1) gemäß einem der Ansprüche 1 bis 3, **dadurch gekennzeichnet, dass** der Ring (7) länglich ist und das Durchgangsloch (8) ein Langloch ist.

5. Die Gitter-Kabelrinne (1) gemäß Anspruch 4, **dadurch gekennzeichnet, dass** die Breite des Langloch-Durchgangslochs (8) in der Ebene der Bodenwand (2) oder der Seitenwand (3), die das Langloch-Durchgangsloch (8) aufweist, größer oder gleich 5 mm und kleiner oder gleich 12 mm ist.

6. Die Gitter-Kabelrinne (1) gemäß einem der Ansprüche 1 bis 5, **dadurch gekennzeichnet, dass** sie eine Vielzahl von Ringen (7) umfasst, die durch eine Stabverzweigung (6a, 6b, 6c, 6d, 6e) ausgebildet sind, wobei die Ringe (7) entlang der Länge und/oder entlang der Breite der Gitter-Kabelrinne (1) verteilt angeordnet sind.

## Revendications

1. Chemin de câbles en treillis (1) réalisé à partir d'une seule pièce de matériau polymère, ayant une section transversale en forme de U, avec une paroi inférieure (2) et deux parois latérales (3) et composé d'une pluralité de tiges longitudinales (4) parallèles et d'une pluralité de tiges transversales (5) parallèles, lesdites tiges longitudinales (4) et les tiges transversales (5) se croisant les unes avec les autres, en formant un treillis et étant unies les unes aux autres, au niveau de leurs intersections, lesdites tiges longitudinales (4) et les tiges transversales (5) étant coplanaires au niveau de leurs intersections, **caractérisé en ce qu'**au moins l'une parmi ladite paroi inférieure (2) et lesdites parois latérales (3) comprend au moins un anneau (7) délimitant un trou traversant (8), ledit anneau (7) étant formé par une branche de tige (6a, 6b, 6c, 6d, 6e) s'étendant à partir d'au moins l'une parmi lesdites tiges longitudinales (4) et les tiges transversales (5), ledit anneau (7) étant coplanaire avec lesdites tiges longitudinales (4) et lesdites tiges transversales (5) dans la paroi inférieure (2) ou dans la paroi latérale (3) comprenant ledit anneau (7).

2. Chemin de câbles en treillis (1) selon la revendication 1, **caractérisé en ce que** ladite branche de tige (6a, 6e) formant ledit anneau (7) est formée dans l'une desdites tiges longitudinales (4) ou dans l'une desdites tiges transversales (5).

3. Chemin de câbles en treillis (1) selon la revendication 1, **caractérisé en ce que** ladite branche de tige (6b, 6c, 6d) formant ledit anneau (7) forme un pont entre deux desdites tiges longitudinales (4) ou desdites tiges transversales (5).

4. Chemin de câbles en treillis (1) selon l'une quelconque des revendications 1 à 3, **caractérisé en ce que** ledit anneau (7) est allongé et ledit trou traversant (8) est un trou oblong.

5. Chemin de câbles en treillis (1) selon la revendication 4, **caractérisé en ce que** la largeur dudit trou traversant (8) oblong, dans le plan de la paroi inférieure (2) ou de la paroi latérale (3) comprenant ledit trou traversant (8) oblong, est supérieure ou égale à 5 mm et inférieure ou égale à 12 mm.

6. Chemin de câbles en treillis (1) selon l'une quelconque des revendications 1 à 5, **caractérisé en ce qu'**il comprend une pluralité desdits anneaux (7) formés par une branche de tige (6a, 6b, 6c, 6d, 6e), lesdits anneaux (7) étant répartis le long de la longueur et/ou le long de la largeur dudit chemin de câbles en treillis (1).
